# EUROPÄISCHE PATENTSCHRIFT

(11) **EP 0 538 728 B1**
(45) Veröffentlichungstag und Bekanntmachung des Hinweises auf die Patenterteilung: **24.09.1997**
(21) Anmeldenummer: 92117577.4
(22) Anmeldetag: 15.10.1992
(51) Int. Cl.: E06B 9/24, G02B 5/32, E06B 3/66, E04C 2/54, H01L 31/052, E04F 10/10

(54) **Lichtleitvorrichtung**
Light conductive device
Dispositif conductif de lumière

(30) Priorität: 23.10.1991 DE 4134955
(43) Veröffentlichungstag der Anmeldung: 28.04.1993
(73) Patentinhaber: Müller, Helmut Frank Ottomar, Prof. Dr.-Ing., D-50933 Köln (DE)
(72) Erfinder: Müller, Helmut Frank Ottomar, Prof. Dr.-Ing., D-50933 Köln (DE); Gutjahr, Jörg, Prof. Dr.-Ing., D-51588 Nümbrecht (DE)
(74) Vertreter: Selting, Günther, Dipl.-Ing.

(56) Entgegenhaltungen:
- EP-A- 0 400 367
- DE-A- 3 840 262
- DE-A- 3 931 594
- FR-A- 2 492 541
- GB-A- 2 176 226

## Beschreibung

Die Erfindung betrifft eine Lichtleitvorrichtung für Gebäude zum Fernhalten des direkt einstrahlenden Sonnenlichts vom Gebäudeinneren und zum Einleiten von diffus einfallendem Licht in das Gebäude.

Aus DE 38 40 262 A1 ist ein transparentes Wandelement für Gebäude bekannt, das eine mit holographischen Elementen versehene Scheibe aufweist. Das holographische Element wirkt nach Art eines Beugungsgitters, indem es einfallendes Licht richtungsselektiv ablenkt oder reflektiert. Dadurch ist es möglich, beispielsweise sehr steil von oben her einfallendes Sonnenlicht im wesentlichen horizontal abzulenken und in die Tiefe des bäuderaumes hineinzuleiten. Die Herstellung von Hologrammen, die für die jeweils gewünschte Lichtablenkung geeignet sind, ist im einzelnen beschrieben.

EP 04 00 367 A2 beschreibt ebenfalls ein Außenwandelement für Gebäude, bei dem hinter einer äußeren Scheibe, die holographische Elemente trägt, eine innere Scheibe im wesentlichen in der Fokalebene der holographischen Elemente angeordnet ist. An der inneren Scheibe sind abschnittsweise Strahlungsempfangselemente in Form lichtundurchlässiger cder reflektierender Bereiche angeordnet. Um den Anteil des in das Gebäude eindringenden Lichts verändern zu können, sind die Strahlungsempfangselemente relativ zu den holographischen Elementen derart bewegbar, daß die einfallende Strahlung wahlweise auf ein Strahlungsempfangselement gebündelt oder ganz oder teilweise an diesem vorbeigeleitet wird. Ein holographisches Element kann zusammen mit einem Strahlungsempfangselement zu einer Einheit zusammengefaßt sein, die um eine horizontale Achse herum schwenkbar ist, wobei das Strahlungsempfangselement in seiner Ebene relativ zu dem holographischen Element zusätzlich verschiebbar ist.

Der Erfindung liegt die Aufgabe zugrunde, eine Lichtleitvorrichtung zur Steuerung des Lichteinfalls in ein Gebäude zu schaffen, die aus einfachen und kompakten Elementen besteht und mit einfachen Mitteln eine Steuerung der in das Gebäude einfallenden Lichtmenge ermöglicht.

Die Lösung dieser Aufgabe erfolgt erfindungsgemäß mit den im Patentanspruch 1 angegebenen Merkmalen.

Bei der erfindungsgemäßen Lichtleitvorrichtung sind die Strahlungsempfangselemente in fester räumlicher Zuordnung zu den holographischen Elementen in Lamellen angeordnet und die Steuerung der in das Gebäude einfallenden Lichtmenge erfolgt ausschließlich durch Verschwenken der gesamten Lamelle. Wenn beispielsweise die Lamelle so ausgerichtet ist, daß die Sonne sich in der Normalenebene der Scheibe befindet, wird das direkt einfallende Sonnenlicht von dem Hologramm auf das Lichtempfangselement gebündelt und dadurch vom Gebäudeinnern ferngehalten. In das Gebäudeinnere fällt dann nur dasjenige Licht, das von dem Hintergrund, also vom Himmel her, diffus einfällt. Dieses diffus einfallende Licht wird nur zu einem ganz geringen Teil auf die Strahlungsempfangselemente geworfen, während der weitaus größere Teil an den Strahlungsempfangselementen vorbei in das Gebäudeinnere gelangt. Auf diese Weise ist es möglich, eine unerwünschte Aufheizung des Gebäudeinneren durch direktes Sonnenlicht zu vermeiden, während dennoch diffuses Tageslicht zu Beleuchtungszwecken in das Gebäude eingeleitet wird.

Wenn ein Teil des direkt einfallenden Sonnenlichts in das Gebäude eingeleitet werden soll, wird die gesamte Lamelle so verstellt, daß der Fokusbereich des holographischen Elements nicht oder nicht vollständig auf das Lichtempfangselement trifft. Während normalerweise die Ausrichtung der Lamelle der Sonne exakt nachgeführt wird, um das direkte Sonnenlicht auf das empfangselement zu konzentrieren und dadurch vom Gebäudeinneren fernzuhalten, erfolgt in dem Fall, daß das Einleiten direkten Sonnenlichts in das Gehäuse erwünscht ist, eine "Fehlausrichtung" der Lamelle in Bezug auf den Sonnenstand.

Die Lichtempfangselemente nehmen das auf sie auftreffende Licht auf oder reflektieren es. Jedenfalls verhindern sie, daß das auftreffende Licht auf dem Luftweg in das Gebäude eingeleitet wird. Die Lichtempfangselemente können beispielsweise lichtabsorbierende oder lichtreflektierende Elemente sein oder auch Wandler, die das auftreffende Licht nach Art photovoltaischer Elemente in Strom umwandeln. Ferner kann es sich auch um die Eingänge von Lichtleiteranordnungen handeln.

Zweckmäßigerweise bestehen die Lamellen aus Doppelscheiben und sie sind um eine horizontale oder um eine vertikale Achse herum schwenkbar, um eine Nachführung nach der Sonne entweder in horizontaler Richtung oder in vertikaler Richtung zu bewirken. Dabei bewirkt das holografische Element eine fokussierung nach Art einer Zylinderlinse, also eine einachsige Fokussierung, weil dann eine Nachführung nach der Sonne in nur einer Richtung erforderlich ist.

Bei einer bevorzugten Ausführungsform der Erfindung ist die innere Scheibe der Doppelscheibe in den zwischen den Lichtempfangselementen liegenden Bereichen mit einem optischen Gitter oder einem Hologramm versehen, um Licht, das auf diese Bereiche fällt, in gewünschter Richtung zu lenken, beispielsweise in die Tiefe des Gebäuderaumes. Falls die innere Scheibe ein Hologramm trägt, ist dieses Hologramm zweckmäßigerweise in gleicher Weise ausgebildet wie dasjenige der äußeren Scheibe. Dadurch wird erreicht, daß die von dem Hologramm der äußeren Scheibe hervorgerufenen Strahlablenkungen von dem Hologramm der inneren Scheibe rückgängig gemacht werden, so daß beide Scheiben in denjenigen Bereichen, in denen sich keine Strahlungsempfangselemente befinden, durchsichtig sind.

Im folgenden werden unter Bezugnahme auf die Zeichnungen Ausführungsbeispiele der Erfindung näher erläutert.

Es zeigen:
- Fig. 1: einen Vertikalschnitt durch ein mit der Lichtleitvorrichtung ausgestattetes Gebäude,
- Fig. 2: einen Schnitt entlang der Linie II-II von Fig. 1,
- Fig. 3: eine vergrößerte Darstellung der Einzelheit III aus Fig. 2,
- Fig. 4: eine zweite Ausführungsform der Lichtleitvorrichtung mit um horizontale Achsen schwenkbaren Lamellen,
- Fig. 5: eine dritte Ausführungsform der Lichtleitvorrichtung,
- Fig. 6: eine vergrößerte Darstellung der Lichtleitvorrichtung aus Fig. 5,
- Fig. 7: eine abgewandelte Ausführungsform von Fig. 3,
- Fig. 8: eine Ausführungsform einer Lamelle, bei der die Hologramme als Beugungsgitter ausgebildet sind, die die einfallende Strahlung schräg zur Seite ablenken, während der hinter den Hologrammen befindliche Bereich von Strahlungsempfangselementen frei bleibt,
- Fig. 9: eine als Steg-Doppelplatte ausgebildete Lamelle, bei der das Lichtempfangselement unter einem von Null verschiedenen Winkel zur Scheibe verläuft,
- Fig. 10: ein anderes Ausführungsbeispiel von Fig. 9 mit seitlicher Ablenkwirkung des Hologramms,
- Fig. 11: eine Lamelle mit innerer Totalreflexion und
- Fig. 12: eine Lamelle mit asymmetrischer Fokussierung durch die Hologramme.

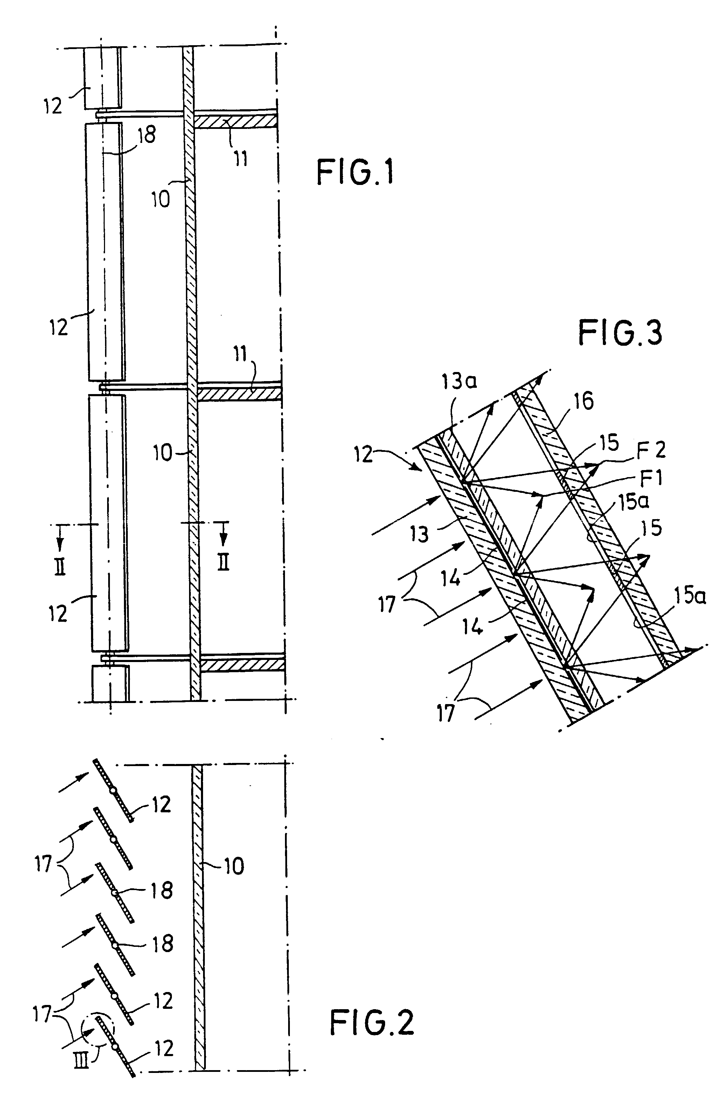

Das in Fig. 1 ausschnittsweise dargestellte Gebäude weist Fenster 10 auf, die sich zwischen den Gebäudedecken 11 erstrecken und die Außenhaut des Gehäuses bilden. Vor jedem Fenster 10 sind mehrere Lamellen 12 angeordnet, die parallel zueinander ausgerichtet sind und um jeweils eine vertikale Achse 18 verschwenkt werden können. Die Verschwenkung der vertikalen Lamellen 12 kann in der Weise vorgenommen werden, daß die Lamellen (in Draufsicht) stets dem einfallenden Sonnenlicht zugewandt sind, das in den Fign. 2 und 3 durch Pfeile bezeichnet ist. Die Lamellen folgen somit der horizontalen Komponente der Sonnenbewegung, wobei sie stets rechtwinklig zur Einfallsrichtung des Sonnenlichts ausgerichtet sind. Die Steuerung dieser Lamellen erfolgt durch (nicht dargestellte) Sensoren, die die Einfallsrichtung des Sonnenlichts feststellen, über geeignete Motore. Die Lamellen 12 sind so angeordnet, daß sie die Fassadenfläche des Gebäudes vollständig bedecken können, ohne daß zwischen ihnen Spalte vorhanden sind.

Jede der Lamellen 12 weist eine durchsichtige äußere Scheibe 13 aus Glas auf, die mehrere strahlungssammelnde holografische Elemente 14 trägt. Die holografischen Elemente 14 bestehen aus durchsichtigen Beschichtungen, die derart erzeugt und bearbeitet sind, wie dies in DE 38 40 262 A1 beschrieben ist. Es handelt sich um Transmissionshologramme, die einfallendes Licht ablenken. Jedes holographische Element 14 ist ein strahlungssammelndes Element, das sich über die gesamte Länge (Höhe) der Lamelle 12 erstreckt und parallel einfallendes Licht auf eine Fokallinie F1 fokussiert. Das holographische Element 14 hat die lichtlenkende Funktion einer Zylinderlinse. In Fig. 3 sind für ein holographisches Element 14 zwei Fokallinien F1 und F2 dargestellt, die unterschiedliche Abstände von der Scheibe 13 haben. Dies liegt daran, daß das holographische Element für unterschiedliche Lichtfarben unterschiedlich große Brennweiten hat. Die Fokallinie F1 ist die Fokallinie für rotes Licht, während die Fokallinie F2 die Fokallinie für blaues Licht ist.

Mit Abstand hinter der äußeren Scheibe 13 ist eine innere Scheibe 16 angeordnet, die für jedes holographische Element 14 ein Lichtempfangselement 15 trägt. Die Lichtempfangselemente 15 liegen etwa in der Mitte zwischen den beiden Fokallinien F1 und F2. Sie schirmen das Licht, das von einem holographischen Element auf den durch die Fokallinien F1 und F2 begrenzten Fokalbereich fokussiert wird, gegenüber dem Gebäudeinneren ab. Das durch die Pfeile 17 bezeichnete direkt einfallende Sonnenlicht, das (in vertikaler Projektion betrachtet) senkrecht durch die äußere Scheibe 13 hindurchgeht, wird durch die Strahlungsempfangselemente 15 abgeschirmt, d.h. entweder aufgenommen oder reflektiert.

Das diffus auf die äußere Scheibe 13 auftreffende Licht wird nicht auf die Strahlungsempfangselemente 15, sondern auf die dazwischenliegenden Bereiche 15a geworfen, die lichtdurchlässig sind. Diese Bereiche 15a können lichtlenkende optische Gitter oder Hologramme tragen. Wenn in den Bereichen 15a holographische Elemente angeordnet sind, die gleich denjenigen der holographischen Elemente 14 ausgebildet sind, wird die durch die holographischen Elemente 14 hervorgerufene Strahlungsverzerrung durch die in den Bereichen 15a angeordneten holographischen Elemente rückgängig gemacht oder kompensiert, so daß die Lamelle mit Ausnahme der von den Lichtempfangselementen 15 eingenommenen Bereiche durchsichtig ist.

Gemäß Fig. 3 sind die Hologramme 14 an der Innenseite der äußeren Scheibe 13 angeordnet. Die Hologramme können dort durch eine Glasschicht 13a bedeckt sein, die mit der Scheibe 13 ein Verbundglas bildet.

Die Lamellen 12 sind so gesteuert, daß sie jeweils exakt auf die Sonne ausgerichtet sind, wenn die direkte Sonnenstrahlung vom Gebäude ferngehalten werden soll. Soll direkte Sonneneinstrahlung in das Gebäude gelangen, erfolgt eine Fehlausrichtung der Lamellen, d.h. diese Lamellen werden in eine derartige Position gestellt, daß das Sonnenlicht (in vertikaler Projektion betrachtet) unter einem von 90° abweichenden Winkel auf sie auftrifft. Auf diese Weise erfolgt die Steuerung der die Lamelle 12 durchdringenden, an den Strahlungsempfangselementen 15 vorbeigehenden Lichtmenge durch Verschwenken der gesamten Lamelle 12.

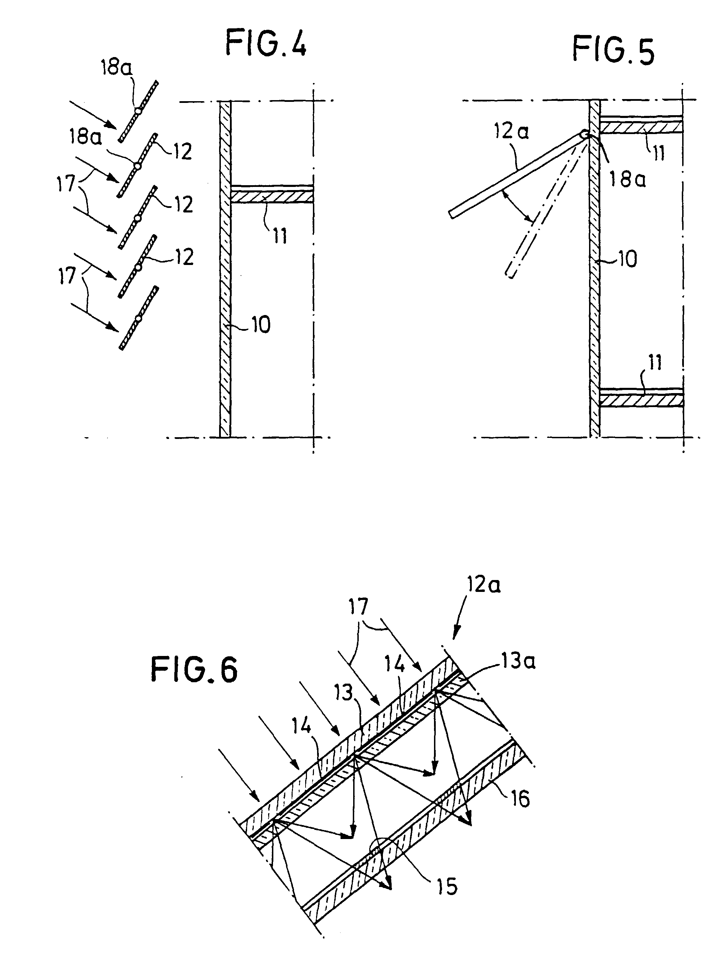

Bei dem Ausführungsbeispiel von Fig. 4 sind die Lamellen 12 vor dem Fenster 10 in horizontaler Ausrichtung angeordnet und um horizontale Achsen 18a schwenkbar. Die Lamellen 12 sind in gleicher Weise ausgebildet wie bei dem ersten Ausführungsbeispiel, d.h. sie haben längslaufende holographische Elemente 14 und im Abstand hinter jedem der holographischen Elemente 14 ein Strahlungsempfangselement 15, das mittig zu dem holographischen Element ausgerichtet ist. Die Lamellen 12 gemäß Fig. 4 werden nicht dem horizontalen Verlauf der Sonne nachgeführt, sondern dem vertikalen Verlauf, also der Sonnenhöhe, derart, daß (in Seitenansicht betrachtet) das direkte Sonnenlicht stets senkrecht auf die Lamellen 12 trifft, wenn das direkte Sonnenlicht vom Gebäude ferngehalten werden soll. Auch hier erfolgt die Nachführung der Lamellenstellung in Bezug auf den Sonnenstand mit einer automatischen Regeleinrichtung, wobei eine Fehlausrichtung vorgesehen werden kann, wenn ein Teil des direkten Sonnenlichts durch die Lamellen hindurchdringen soll.

Eine ähnliche Ausführungsform zeigt Fig. 5. Hier sind größere Lamellen 12a in Form von Platten oder Klappen vorgesehen, die um eine vertikale Achse 18a schwenkbar sind. Die Achse 18a befindet sich hier an der Oberkante des Fensters 10, so daß die einflügelige Lamelle 12a nach Art einer Markise im wesentlichen den gesamten direkten Einstrahlungsbereich des Fensters 10 abdecken kann. Die Nachführung der Lamelle 12 erfolgt auch hier entsprechend der Sonnenhöhe.

Fig. 6 zeigt den Querschnitt der Lamelle 12a, wobei zu erkennen ist, daß dieser Querschnitt im wesentlichen demjenigen von Fig. 3 entspricht.

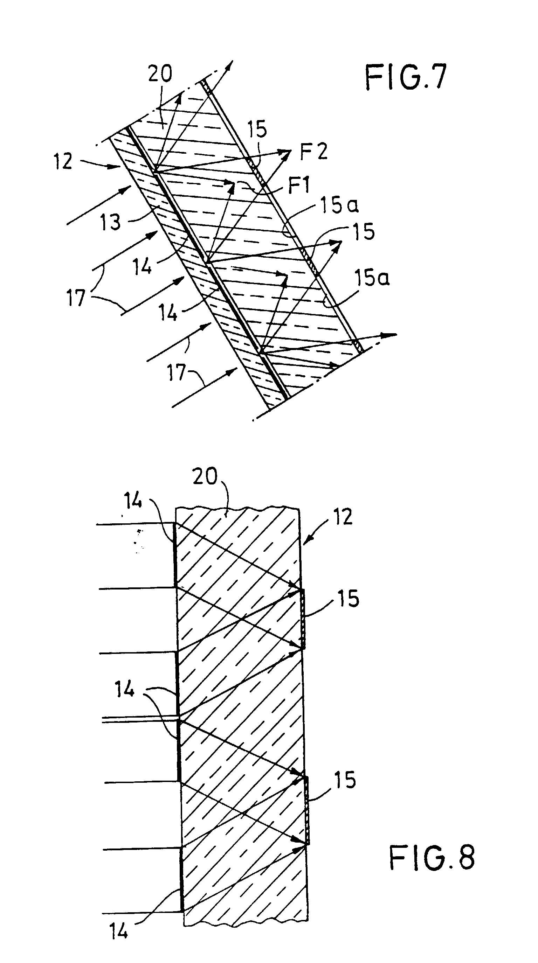

Bei dem Ausführungsbeispiel von Fig. 7 ist hinter der die Hologramme 14 tragenden Scheibe 13 eine weitere Scheibe 20 angeordnet, auf deren Rückseite die Strahlungsempfangselemente 15 angeordnet sind. Jedes Strahlungsempfangselement 15 ist hier mittig hinter einem Hologramm 14 angeordnet und die Hologramme 14 sind Zylinder-Zonenplatten, die eine ähnliche Wirkung haben, wie eine Zylinderlinse und die Strahlung entlang wellenlängenabhängiger Fokussierungslinien fokussieren, von denen nur die Linien F1 und F2 dargestellt sind. Die Fokussierung erfolgt symmetrisch, d.h. zu derjenigen Normalenebene des Hologramms 14 hin, die die Mittellinie des Hologramms schneidet. Parallel einfallende Strahlung 17 wird durch die Strahlungsempfangselemente 15 absorbiert oder reflektiert, während diffus einfallende Strahlung durch die Zwischenräume 15a zwischen den Strahlungsempfangselementen durchgelassen wird und zur Raumbeleuchtung benutzt werden kann. Die Strahlungsempfangselemente 15 sind auf der Rückseite der Scheibe 20 angeordnet, die nicht mit einer weiteren Scheibe bedeckt ist. Die Lichtempfangselemente können beispielsweise reflektierende weiße Farbaufträge sein oder eine Farbe mit retroreflektierenden Eigenschaften, die in der gleichen Richtung reflektiert, in der der Strahlungseinfall erfolgt ist.

Wenn die Hologramme nicht auf der Scheibe 13 sondern auf der Vorderseite der Scheibe 20 angeordnet sind, kann die Scheibe 13 entfallen, jedoch sind in diesem Fall Maßnahmen für den Schutz der Hologramme zu treffen.

Fig. 8 zeigt ein Ausführungsbeispiel, bei dem eine Scheibe 20 an ihrer Vorderseite mit Hologrammen 14 und an ihrer Rückseite mit Strahlungsempfangselementen 15 versehen ist. Die Hologramme 14 sind keine fokussierenden sondern lichtablenkende Hologramme, die als Beugungsgitter ausgebildet sind. Demnach wird parallel einfallende Strahlung von dem Hologramm 14 seitlich abgelenkt. An der Stelle, auf die das senkrecht auftreffende Licht abgelenkt wird, befindet sich an der Rückseite der Scheibe 20 ein Strahlungsempfangselement 15. Die Hologramme 14 und Strahlungsempfangselemente 15 sind gegeneinander versetzt angeordnet, d.h. an der Stelle, an der sich ein Strahlungsempfangselemente 15 befindet, befindet sich an der Vorderseite der Scheibe 20 kein Hologramm. Ferner sind benachbarte Hologramme 14, die durch einen Zwischenraum voneinander getrennt sind, so ausgebildet, daß sie das einfallende Licht nach entgegengesetzten Richtungen ablenken, und somit auf das gleiche Empfangselement 15 gerichtet. Zwei einem Empfangselement 15 zugeordnete Hologramme 14 haben also einen gegenseitigen Abstand voneinander und sie bilden ein Hologrammpaar. Wie aus Fig. 8 zu ersehen ist, grenzen die beiden Hologramme benachbarter Hologrammpaare unmittelbar aneinander an. Die empfangselemente 15 sind in gleichmäßigen gegenseitigen Abständen angeordnet, wobei der Abstand zweier benachbarter Strahlungsempfangselemente so groß ist, wie die doppelte Breite eines Hologramms 14 bzw. eines lungsempfangselements.

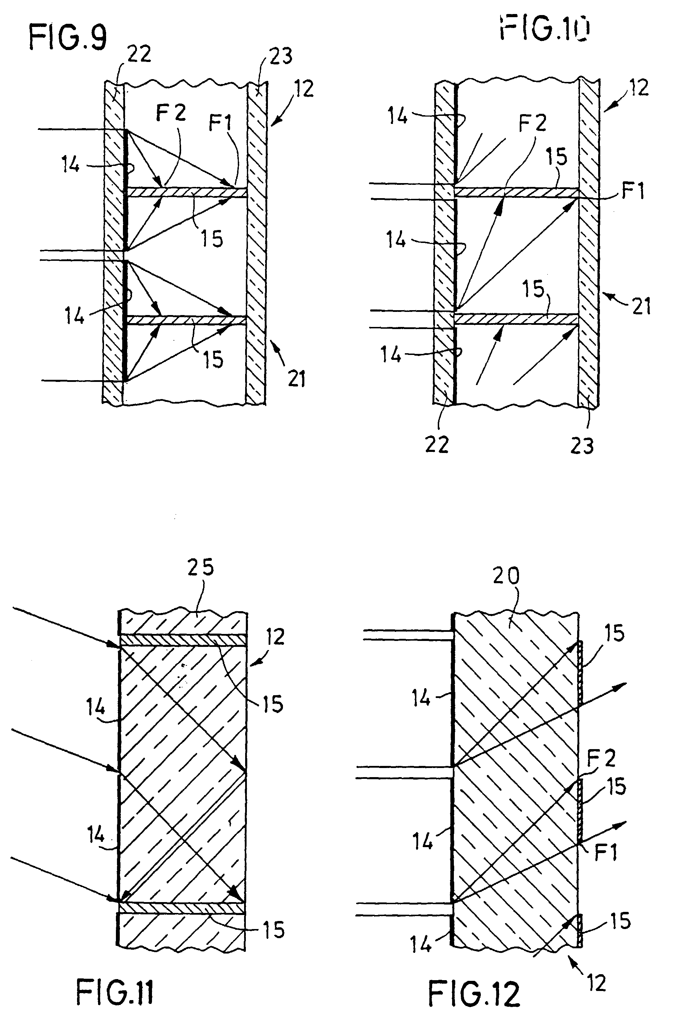

Bei dem Ausführungsbeispiel von Fig. 9 ist eine Steg-Doppelplatte 21 vorgesehen, die eine vordere Scheibe 22 und eine hintere Scheibe 23 aufweist. Die beiden Scheiben sind durch querlaufende Stege, welche die Strahlungsempfangselemente 15 bilden, voneinander getrennt. Die Strahlungsempfangselemente 15 verlaufen somit bei einem von Null verschiedenen Winkel zu den Hologrammen 14, vorzugsweise rechtwinklig. In Fig. 9 sind die Hologramme 14 Zylinder-Zonenplatten, die eine längenselektive Fokussierung entlang von Fokussierungslinien F1,F2 bewirken. Die Strahlungsempfangselement 15 verlaufen mittig zu jedem Hologramm 14, so daß Strahlung von der einen Hälfte des Hologramms 14 auf die eine Seite und Strahlung von der anderen Hälfte des Hologramms 14 auf die andere Seite des Strahlungsempfangselements 15 gerichtet wird. Die empfangselemente 15 decken nur einen ganz geringen Teil eines jeden Hologramms 14 ab. Die Strahlungsempfangselemente 15 sind bei diesem Ausführungsbeispiel vorzugsweise Solarzellen, die Licht in elektrische Energie umwandeln. Die Anordnung der Strahlungsempfangselemente senkrecht zu den Hologrammen ermöglicht ein spektralselektives Ausblenden von Strahlung, da die Hologramme das Sonnenlicht spektral zerlegen

Das Ausführungsbeispiel von Fig. 10 entspricht weitgehend demjenigen von Fig. 9, jedoch mit dem Unterschied, daß die Hologramme 14 Beugungsgitter sind, die senkrecht einfallendes Licht seitlich ablenken. Die Strahlungsempfangselemente 15 sind hier zwischen zwei benachbarten Hologrammen 14 angeordnet und jedes der Hologramme 14 lenkt senkrecht auftreffendes Licht asymmetrisch nur nach einer Seite ab. Die Fläche hinter jedem Hologramm 14 bleibt von Strahlungsempfangselementen 15 frei. Es wäre auch möglich, jeweils zwei Hologrammen 14 einem einzigen Strahlungsempfangselement 15 zuzuordnen, wie in Fig. 8. In diesem Fall wäre nur die halbe Anzahl von Strahlungsempfangselementen 15 erforderlich, jedoch müßte jedes von beiden Seiten her Strahlung empfangen können. Auch hier ist, wie im Ausführungsbeispiel der Fig. 9, ein spektralselektives Ausblenden möglich.

Bei dem Ausführungsbeispiel von Fig. 11 ist eine einzige Scheibe 25 vorgesehen, die auf der Vorderseite mit Hologrammen 14 versehen ist, und die aus die aus mehreren Feldern besteht, welche durch Strahlungsempfangselemente 15 voneinander getrennt sind. Die Hologramme 14 sind Beugungsgitter, die senkrecht auftreffendes Licht so ablenken, daß das Licht innerhalb der Scheibe 25 unter einem Winkel weiterläuft, der kleiner ist als der Grenzwinkel der Totalreflexion an der Rückseite der Scheibe. Senkrecht eintreffendes Licht wird also in der Scheibe totalreflektiert, bis es auf das Strahlungsempfangselement 15 trifft, das an demjenigen Ende des Scheibenabschnitts angeordnet, zu dem das Hologramm 14 das Licht ablenkt.

Fig. 12 zeigt eine Lamelle 12 mit einer einzigen Scheibe 20, auf deren Vorderseite Hologramme 14 und auf deren Rückseite Strahlungsempfangselemente 15 angeordnet sind. Die Hologramme 14 sind Beugungs-Hologramme, die senkrecht auftreffendes Licht in einer bestimmten Richtung ablenken, wobei der Ablenkwinkel von der Wellenlänge abhängig ist. Jeweils ein lungsempfangselement 15 hat etwa die halbe Größe des zugehörigen Hologramms und die Strahlungsempfangselemente 15 sind parallel zu den Hologrammen und hinter diesen angeordnet. Die eine Hälfte der Scheibe 20 bleibt hinter jedem Hologramm 14 von einem Strahlungsempfangselement 15 frei.

## Patentansprüche

1. Lichtleitvorrichtung für Gebäude, mit schwenkbar montierten Lamellen (12), die jeweils eine Scheibe (13) mit mindestens einem strahlungssammelnden holographischen Element (14) aufweisen, hinter dem in festem Abstand ein Strahlungsempfangselement (15) angeordnet ist, dessen Fläche kleiner ist als diejenige des holographischen Elements, wobei die Steuerung der die Lamellen (12) durchdringenden, an den Strahlungsempfangselementen (15) vorbeigehenden Lichtmenge durch Verschwenken der gesamten Lamelle (12) erfolgt,
**dadurch gekennzeichnet**,
daß die Strahlungsempfangselemente (15) relativ zu den holographischen Elementen (14) fest angeordnet sind, daß die holographischen Elemente (14) derart ausgebildet sind, daß sie eine Linienfokussierung nach Art einer Zylinderlinse bewirken oder daß sie als Beugungsgitter ausgebildet sind, und daß die Lamellen (13) durch Verschwenken derart in bezug auf die Sonne ausrichtbar ist, daß das fokussierte Sonnenlicht wahlweise mehr oder weniger auf das Strahlungsempfangselement trifft.

2. Lichtleitvorrichtung nach Anspruch 1, dadurch gekennzeichnet, daß die Strahlungsempfangselemente (15) an einer zu der Scheibe (13) parallelen inneren Scheibe (16) vorgesehen sind.

3. Lichtleitvorrichtung nach Anspruch 2, dadurch gekennzeichnet, daß die innere Scheibe (16) mindestens ein holographisches Element trägt, das im wesentlichen gleich demjenigen der äußeren Scheibe (13) ist.

4. Lichtleitvorrichtung nach Anspruch 2, dadurch gekennzeichnet, daß die innere Scheibe (16) mindestens ein optisches Gitter oder Hologramm zum Ablenken des an dem Strahlungsempfangselement (15) vorbeigehenden Lichts aufweist.

5. Lichtleitvorrichtung nach einem der Ansprüche 1-4, dadurch gekennzeichnet, daß die Lamellen (12) um vertikale Achsen (18) schwenkbar und dem horizontalen Sonnenverlauf nachgeführt sind.

6. Lichtleitvorrichtung nach einem der Ansprüche 1-4, dadurch gekennzeichnet, daß die Lamellen (12) um horizontale Achsen (18a) schwenkbar und dem vertikalen Sonnenverlauf nachgeführt sind.

7. Lichtleitvorrichtung nach einem der Ansprüche 1-6, dadurch gekennzeichnet, daß das Strahlungsempfangselement (15) ein längs der Lamelle (12) verlaufender durchgehender Streifen von konstanter Breite ist, der mittig hinter dem holographischen Element (14) angeordnet ist.

8. Lichtleitvorrichtung nach einem der Ansprüche 1-7, dadurch gekennzeichnet, daß der Raum zwischen den holographischen Elementen (14) und den Strahlungsempfangselementen (15) durch eine Scheibe (20) ausgefüllt ist.

9. Lichtleitvorrichtung nach einem der Ansprüche 1-7, dadurch gekennzeichnet, daß die Scheibe (22) zusammen mit einer weiteren Scheibe (23) eine Steg-Doppelplatte bildet, deren Stege sich zwischen den Scheiben (22,23) erstrecken und die Strahlungsempfangselemente (15) aufweisen.

10. Lichtleitvorrichtung nach einem der Ansprüche 1-9, dadurch gekennzeichnet, daß die holographischen Elemente (14) eine Spektralzerlegung der einfallenden Strahlung bewirken und die Lichtempfangselemente (15) selektiv einen Teil des zerlegten Spektrums absorbieren.

11. Lichtleitvorrichtung nach einem der vorhergehenden Ansprüche, dadurch gekennzeichnet, daß die holographischen Elemente (14) einfallendes Licht in der Weise ablenken, daß dieses Licht in der Scheibe (13) unterhalb des Grenzwinkels der Totalreflexion weiterläuft und an der Rückseite der Scheibe reflektiert wird.

12. Lichtleitvorrichtung nach einem der Ansprüche 1-11, dadurch gekennzeichnet, daß die holographischen Elemente (14) Zylinder-Zonenplatten sind.

13. Lichtleitvorrichtung nach einem der Ansprüche 1-12, dadurch gekennzeichnet, daß die holographischen Elemente (14) asymmetrische Beugungsgitter sind, die senkrecht einfallende Strahlung nach einer Seite hin fokussieren.

## Claims

1. A light conducting device for buildings, having pivotally mounted lamellae (12), each with a panel (13) provided with at least one radiation collecting holographic element (14) behind which a radiation receiving element (15) is arranged at a fixed distance therefrom, the area of the receiving element being smaller than that of the holographic element, the control of the amount of light passing through the lamellae (12) and by the radiation receiving elements (15) is performed by pivoting the entire lamella (12),
characterized in
that the radiation receiving elements (15) are arraniged fixedly with respect to the holographic elements (14), in that the holographic elements are designed such that they effect a line focussing in the manner of a cylindrical lens or in that they are shaped as diffraction gratings, and in that the lamella (13) is adapted to be oriented with respect to the sun by pivoting, such that the focussed sun light selectively impinges more or less on the radiation receiving element.

2. The light conducting element of claim 1, characterized in that the light receiving elements (15) are provided on an inner panel (16) extending in parallel to the panel (13).

3. The light conducting device of claim 2, characterized in that the inner panel (16) carries at least one holographic element that is substantially similar to that of the outer panel (13).

4. The light conducting device of claim 2, characterized in that the inner panel (16) has at least one optical grating or hologram for deflecting the light passing by the light receiving element (15).

5. The light conducting device of one of claims 1-4, characterized in that the lamellae (12) are pivotable about vertical axes (18) and that they track the horizontal path of the sun.

6. The light conducting device of one of claims 1-4, characterized in that the lamellae (12) are pivotable about horizontal axes (18a) and that they track the vertical path of the sun.

7. The light conducting device of one of claims 1-6, characterized in that the light receiving element (15) is a continuous strip of constant width extending along the lamella (12) and being arranged centrally behind the holographic element (14).

8. The light conducting device of one of claims 1-7, characterized in that the space between the holographic elements (14) and the radiation receiving elements (15) is filled by a panel (20).

9. The light conducting device of one of claims 1-7, characterized in that the panel (22), together with another panel (23), forms a web double panel, the webs of which extend between the panels (22, 23) and are provided with the radiation receiving elements (15).

10. The light conducting device of one of claims 1-9, characterized in that the holographic elements (14) cause a spectral decomposition of the incident radiation and in that the light receiving elements selectively absorb a part of the decomposed spectrum.

11. The light conducting device of one of the preceding claims, characterized in that the holographic elements (14) deflect incident light such that this light travels on in the panel (13) below the limit angle of total reflection and is reflected at the rear surface of the panel.

12. The light conducting device of one of claims 1-11, characterized in that the holographic elements (14) are cylinder zone plates.

13. The light conducting device of one of claims 1-12, characterized in that the holographic elements (14) are asymmetric diffraction gratings that focus perpendicularly incident light towards one side.

## Revendications

1. Dispositif directeur de la lumière pour immeubles comprenant des panneaux (12) montés de manière à pouvoir pivoter, qui sont formés chacun d'une lame transparente (13) munie d'au moins un élément holographique (14) concentrant le rayonnement, derrière lequel est disposé à une distance fixe un élément récepteur de lumière (15), dont la surface est inférieure à celle de l'élément holographique, la quantité de lumière qui traverse les panneaux (12) et passe à côté des éléments récepteurs de lumière (15) étant commandée par le pivotement de l'ensemble du panneau (12),
caractérisé en ce que les éléments récepteurs de lumière (15) sont disposés de manière fixe par rapport aux éléments holographiques (14), en ce que les éléments holographiques (14) sont conçus de telle sorte qu'ils provoquent, à la manière d'une lentille cylindrique, une focalisation linéaire ou en ce qu'ils sont conçus comme des réseaux de diffraction, et en ce que les panneaux (12) peuvent être orientés par pivotement en fonction du soleil de telle sorte que, au choix, une quantité plus ou moins importante de lumière solaire focalisée parvient sur l'élément récepteur de lumière.

2. Dispositif directeur de la lumière selon la revendication 1, caractérisé en ce qu'il est prévu de poser les éléments récepteurs de lumière (15) sur une lame transparente intérieure (16) parallèle à la lame transparente (13).

3. Dispositif directeur de la lumière selon la revendication 2, caractérisé en ce que la lame intérieure (16) porte au moins un élément holographique, qui est sensiblement identique à celui de la lame extérieure (13).

4. Dispositif directeur de la lumière selon la revendication 2, caractérisé en ce que la lame intérieure (16) porte au moins un réseau optique ou hologramme destiné à dévier la lumière qui passe à côté de l'élément récepteur de lumière (15).

5. Dispositif directeur de la lumière selon l'une quelconque des revendications 1 à 4, caractérisé en ce que les panneaux (12) peuvent pivoter autour des axes verticaux (18) et suivre le déplacement horizontal du soleil.

6. Dispositif directeur de la lumière selon l'une quelconque des revendications 1 à 4, caractérisé en ce que les panneaux (12) peuvent pivoter autour des axes horizontaux (18a) et suivre le déplacement vertical du soleil.

7. Dispositif directeur de la lumière selon l'une quelconque des revendications 1 à 6, caractérisé en ce que l'élément récepteur de lumière (15) est une bande continue de largeur constante, s'étendant longitudinalement contre le panneau (12) et disposée au centre derrière l'élément holographique (14).

8. Dispositif directeur de la lumière selon l'une quelconque des revendications 1 à 7, caractérisé en ce que l'espace entre les éléments holographiques (14) et les éléments récepteurs de lumière (15) est rempli par une plaque transparente (20)

9. Dispositif directeur de la lumière selon l'une quelconque des revendications 1 à 7, caractérisé en ce que la lame transparente (22) forme avec une autre lame transparente (23) une plaque jumelée avec entretoises, dont les entretoises s'étendent entre les lames (22, 23) et sont munies d'éléments récepteurs de lumière (15).

10. Dispositif directeur de la lumière selon l'une quelconque des revendications 1 à 9, caractérisé en ce que les éléments holographiques (14) décomposent le rayonnement incident en spectres et les éléments récepteurs de lumière (15) absorbent de manière sélective une partie du spectre décomposé.

11. Dispositif directeur de la lumière selon l'une quelconque des revendications précédentes, caractérisé en ce que les éléments holographiques (14) dévient la lumière incidente de telle sorte que cette lumière se propage dans la lame transparente (13) au-dessous de l'angle limite de la réflexion totale et est réfléchie sur la face arrière de la lame.

12. Dispositif directeur de la lumière selon l'une quelconque des revendications 1 à 11, caractérisé en ce que les éléments holographiques (14) sont des plaques à zone cylindrique.

13. Dispositif directeur de la lumière selon l'une quelconque des revendications 1 à 12, caractérisé en ce que les éléments holographiques (14) sont des réseaux de diffraction asymétriques, qui focalisent vers un côté le rayonnement perpendiculaire incident.
